# EUROPEAN PATENT APPLICATION

(11) **EP 4 707 658 A1**
(43) Date of publication of application: **11.03.2026**
(21) Application number: 25200800.8
(22) Date of filing: 08.09.2025
(51) Int. Cl.: F16M 13/02, F16M 11/04, F16M 11/20, G09F 9/302

(54) **UNIVERSAL MOUNTING SYSTEM FOR ELECTRONIC DISPLAY ARRAY**

(30) Priority: 06.09.2024 US 202463691506 P; 05.09.2025 US 202519320220
(71) Applicant: Legrand AV Inc., Minnetonka, MN 55343 (US)
(72) Inventor: MOON, Michael A., Minnetonka, 55343 (US); BREMMON, Jeff, Minnetonka, 55343 (US); FORSBERG, Jim, Minnetonka, 55343 (US); SCHUH, Mathew, Minnetonka, 55343 (US)
(74) Representative: Patentanwälte Geyer, Fehners & Partner mbB

(57) **Abstract**

A mounting system (100) for mounting displays (106) in an array includes a pair (102) of horizontally spaced-apart and parallel vertical mounting assemblies (104), with a plurality of wall attachment assemblies (110) adapted to operably couple the mounting assemblies (104) to a surface of the wall (258). Each mounting assembly (104) includes an elongate upright (108), a bottom display mounting interface assembly (114, 238) coupled to a bottom end (239) of the upright (108), and first and second H-block assemblies (198) slidably engaged with the upright (108). Each H-block assembly (198) defines upper and lower notches (216, 218) for receiving and retaining a fastening button (200) attached to the display (106).

## Description

### RELATED APPLICATIONS

The present application claims the benefit of U.S. Provisional Application No. 63/691,506, entitled UNIVERSAL MOUNTING SYSTEM FOR ELECTRONIC DISPLAY ARRAY, and filed September 6, 2024, and claims the benefit of U.S. Patent Application No. 19/320,220, entitled UNIVERSAL MOUNTING SYSTEM FOR ELECTRONIC DISPLAY ARRAY, and filed September 5, 2025.

### TECHNICAL FIELD

The invention relates to wall mounts for electronic displays, and more specifically to wall mounts for an array of electronic displays.

### BACKGROUND

Flat panel electronic displays including displays with LED (light emitting diode), OLED (organic light emitting diode), QLED (quantum dot light emitting diode), and LCD (liquid crystal) screens have become a common feature in commercial building environments such as lobbies, corridors, atriums, foyers, and entryways. Such displays can be convenient way of displaying useful information such as directories, event signage, and advertising. Often, it is desirable to mount multiple displays adjacent to each other in a horizontal and/or vertical array.

Array mounting systems for electronic displays are known. For example, a mount for electronic displays that enables array mounting is disclosed in U.S. Patent No. 11,882,379.

A drawback of such known array mounts, however, is that it can be difficult to obtain precise vertical and horizontal alignment and leveling of the displays in the array, which can lead to an uneven appearance and less than optimal aesthetic. Also, attachment of the mount to the wall, leveling, alignment, and coupling of the displays can be time consuming and skilled-labor intensive.

What is needed is an array mounting system for multiple displays that enables simple and rapid attachment of the mount to a wall and easy mounting, leveling, and precise alignment of the displays in the array.

The invention is defined by the independent claims. Further developments are given in the dependent claims.

### SUMMARY

Embodiments of the invention provide an array mounting system for multiple displays that enables simple and rapid attachment of the mounting system to a wall, and easy mounting, leveling, and precise alignment of the displays in the array.

According to embodiments of the invention, a system for mounting displays in an array includes horizontally spaced-apart and parallel vertical mounting assemblies, with a plurality of wall attachment assemblies adapted to operably couple the mounting assemblies to a surface of the wall. The mounting assemblies each include an elongate upright, a bottom display mounting interface assembly coupled to a bottom end of the upright, and first and second H-block assemblies slidably engaged with the uprights. Each H-block assembly defines upper and lower notches for receiving and retaining a fastening button attached to the display.

In an embodiment, a mounting system for mounting a plurality of displays in an array on a wall of a structure, the mounting system includes a pair of horizontally spaced-apart and parallel vertical mounting assemblies. Each vertical mounting assembly includes a first elongate upright presenting a front wall, a rear wall, and opposing side walls, and a longitudinal length dimension, a longitudinally oriented central channel defined in the front wall, the longitudinally oriented central channel having opposing recesses spaced inwardly from the front wall, a plurality of wall attachment assemblies, each wall attachment assembly including a wall interface adapted to attach to the wall of the structure, an ear bracket clamped to the elongate upright and having a projecting ear portion, and a depth adjustment control operably coupled to the projecting ear portion of the ear bracket assembly, wherein the depth adjustment control is selectively operable to vary a distance between the wall interface and the upright. The system further includes a plurality of display mounting interface assemblies disposed along the longitudinal length dimension of the upright, each display mounting interface assembly including an H-block assembly including a body having a front wall defining a lower notch having a width dimension, an upper notch having a width dimension, a recess being defined behind the front wall of the body, the H-block assembly further including a securing portion slidably received in the central channel of the upright and having a plurality of resilient members engaged in the opposing recesses of the central channel of the upright to temporarily frictionally hold the H-block assembly in a selected vertical position on the upright. A plurality of fastening buttons is adapted to couple with the display, each fastening button having a head portion, a neck portion, and a positioning control, the neck portion having a width dimension less than the width dimensions of the lower notch and the upper notch, the head portion having a width dimension greater than the width dimensions of the downwardly facing notch and the upwardly facing notch and received in the recess of the H-block assembly, the positioning control selectively operable to position the head portion relative to a rear side of the front wall of the body. The system further includes a bottom display mounting interface assembly disposed proximate and secured to a bottom end of the upright, the bottom display mounting interface assembly comprising a carrier block having a forward receiver portion and a rear guide portion, the forward receiver portion having a front wall defining a notch, the notch having a width dimension greater than the width dimension of the neck of each of the plurality of fastening buttons and less than the width dimension of the head of each of the plurality of fastening buttons, the rear guide portion slidably received in the opposing recesses of the upright.

In an embodiment, each of the opposing side walls of the upright defines a longitudinally oriented channel, and each of the ear brackets of the wall attachment assemblies comprises a wrap-around bracket having a rear wall and a pair of spaced-apart projecting side walls, and a pair of backing plates, the upright being received between the spaced-apart projecting side walls and each of the backing plates being received in a separate one of the longitudinally oriented channels of the upright and secured to the wrap-around bracket to clamp the ear bracket to the upright. The wall interface may have a forwardly projecting tab defining a guide slot, the forwardly projecting tab being slidably received in a slot defined by the ear bracket, a guide pin extending from one of the pair of backing plates through the guide slot, wherein when the depth adjustment control is operated, the ear bracket slides over the forwardly projecting tab, guided by the guide pin and guide slot.

In an embodiment, the depth adjustment control can be a threaded bolt fixed to the wall interface, and a nut selectively rotatable on the threaded bolt.

In a further embodiment, each of the vertical mounting assemblies includes a second elongate upright coupled at a top end of the first upright, the second elongate upright presenting a front wall, a rear wall, and opposing side walls, and a longitudinal length dimension, a longitudinally oriented central channel defined in the front wall, the longitudinally oriented central channel having opposing recesses spaced inwardly from the front wall, the longitudinally oriented central channel of the second upright aligned with the longitudinally oriented central channel of the first elongate upright. The first and second uprights can be coupled together with an upright connector assembly.

In an embodiment, the bottom display mounting interface assembly includes a coupling bracket affixed to the bottom end of the upright, and a vertical height adjustment control operably coupled to the coupling bracket, the vertical height adjustment control operably coupled to the carrier block and selectively operable to shift a vertical position of the carrier block relative to the bottom end of the upright. Tthe vertical height adjustment control can include a bolt captured by the coupling bracket and rotatable relative to the coupling bracket, the bolt threaded into the carrier block such that rotation of the bolt selectively vertically shifts the carrier block relative to the coupling bracket.

In an embodiment, each display mounting interface assembly further comprises a plumb clip selectively positionable between the head portion of the fastening button and the rear side of the front wall of the body.

Each one of the plurality of displays mounted by the system may have an electronic display screen selected from the group consisting of LED screens, OLED screens, QLED screens, and LCD screens.

In an embodiment, a method of mounting a first plurality of displays in a vertical and horizontal array on a wall of a structure includes providing first and second pairs of mounting assemblies. Each mounting assembly can include a first elongate upright presenting a front wall, a rear wall, and opposing side walls, and a longitudinal length dimension, a longitudinally oriented central channel defined in the front wall, the longitudinally oriented central channel having opposing recesses spaced inwardly from the front wall. A plurality of wall attachment assemblies is further included, each wall attachment assembly having a wall interface adapted to attach to the wall of the structure, an ear bracket clamped to the elongate upright and having a projecting ear portion, and a depth adjustment control operably coupled to the projecting ear portion of the ear bracket assembly, wherein the depth adjustment control is selectively operable to vary a distance between the wall interface and the upright. The mounting assemblies further include a plurality of display mounting interface assemblies disposable along the longitudinal length dimension of the upright, each display mounting interface assembly having an H-block assembly including a body having a front wall defining a lower notch having a width dimension, an upper notch having a width dimension, a recess being defined behind the front wall of the body, the H-block assembly further including a securing portion slidably received in the central channel of the upright and having a plurality of resilient members engaged in the opposing recesses of the central channel of the upright to temporarily frictionally hold the H-block assembly in a selected vertical position on the upright. A plurality of fastening buttons is adapted to couple with the display, each fastening button having a head portion, a neck portion, and a positioning control, the neck portion having a width dimension less than the width dimensions of the lower notch and the upper notch, the head portion having a width dimension greater than the width dimensions of the downwardly facing notch and the upwardly facing notch and receivable in the recess of the H-block assembly, the positioning control selectively operable to position the head portion relative to a rear side of the front wall of the body. The mounting assembly further includes a bottom display mounting interface assembly disposed proximate and secured to a bottom end of the upright, the bottom display mounting interface assembly comprising a carrier block having a forward receiver portion and a rear guide portion, the forward receiver portion having a front wall defining a notch, the notch having a width dimension greater than the width dimension of the neck of each of the plurality of fastening buttons and less than the width dimension of the head of each of the plurality of fastening buttons, the rear guide portion slidably received in the opposing recesses of the upright. The method proceeds by securing the first and second pairs of mounting assemblies to the wall with the wall attachment assemblies, the upright of each mounting assembly disposed so as to extend in a vertical direction and spaced-apart horizontally and parallel to the uprights of each other mounting assembly, attaching four of the plurality of fastening buttons to a rear side of a first display with a lower pair of the fastening buttons being disposed along a bottom edge of the first display and an upper pair of the fastening buttons being disposed along a top edge of the first display, engaging each of the lower pair of fastening buttons on the first display with a separate one of the forward receiver portions of the bottom display mounting interface assemblies of the first pair of mounting assemblies, with the neck of the fastening button extending through the notch, sliding a first one of the plurality of H-block assemblies on each upright of the first pair of mounting assemblies to engage one of the upper pair of fastening buttons on the first display so that the neck of the fastening button extends through the lower notch, attaching another four of the plurality of fastening buttons to a rear side of a second display with a lower pair of the fastening buttons being disposed along a bottom edge of the second display and an upper pair of the fastening buttons being disposed along a top edge of the second display, engaging each of the lower pair of fastening buttons of the second display with a separate one of the forward receiver portions of the bottom display mounting interface assemblies of the second pair of mounting assemblies, with the neck of the fastening button extending through the notch, and sliding a first one of the plurality of H-block assemblies on each upright of the second pair of mounting assemblies to engage one of the upper pair of fastening buttons on the second display so that the neck of the fastening button extends through the lower notch. The first and second displays are thereby attached to the wall in a horizontally adjacent row.

In an embodiment, the method can further include adjusting the depth adjustment control of each of the plurality of wall attachment assemblies of each of the first and second pairs of mounting assemblies to adjust a distance between the upright of the respective mounting assembly and the wall.

In an embodiment of a method, the bottom display mounting interface assembly of each mounting assembly includes a coupling bracket affixed to the bottom end of the upright, and a vertical height adjustment control operably coupled to the coupling bracket, the vertical height adjustment control operably coupled to the carrier block and selectively operable to shift a vertical position of the carrier block relative to the bottom end of the upright, and the method includes positioning the first and second displays with the vertical height adjustment controls.

In an embodiment, the method includes adjusting a position of each of the first and second displays using the positioning control of each fastening button.

Each display mounting interface assembly can include a plumb clip selectively positionable between the head portion of the fastening button and the rear side of the front wall of the body, and the method can include adjusting the positions of the first and second display using the plumb clips.

In an embodiment, the method further includes mounting third and fourth displays above the first and second displays respectively by attaching four of the plurality of fastening buttons to a rear side of a third display with a lower pair of the fastening buttons being disposed along a bottom edge of the third display and an upper pair of the fastening buttons being disposed along a top edge of the third display, engaging the lower pair of fastening buttons of the third display in the upper notches of the first H-block assemblies on the first pair of mounting assemblies with the necks of the fastening buttons extending through the notches, sliding a second one of the plurality of H-block assemblies on each upright of the first pair of mounting assemblies to engage one of the upper pair of fastening buttons on the third display so that the neck of the fastening button extends through the lower notch, attaching four of the plurality of fastening buttons to a rear side of a fourth display with a lower pair of the fastening buttons being disposed along a bottom edge of the fourth display and an upper pair of the fastening buttons being disposed along a top edge of the fourth display, engaging the lower pair of fastening buttons of the fourth display in the upper notches of the first H-block assemblies on the second pair of mounting assemblies with the necks of the fastening buttons extending through the notches, and sliding a second one of the plurality of H-block assemblies on each upright of the second pair of mounting assemblies to engage one of the upper pair of fastening buttons on the fourth display so that the neck of the fastening button extends through the lower notch.

In a further embodiment, an electronic display system includes a plurality of electronic displays, each of the plurality of electronic displays having a plurality of fastening buttons on a rear side of the electronic display arranged in a lower pair and an upper pair, a mount having a first pair of elongate uprights, a plurality of wall attachment assemblies adapted to operably couple the elongate uprights to a surface of the wall, a pair of bottom display mounting interface assemblies, each bottom display mounting interface assembly coupled to a bottom end of a separate one of the elongate uprights, each bottom display mounting interface assemblies having a forward receiver portion for receiving and retaining one of the fastening buttons, first and second pluralities of H-block assemblies, each one of the first plurality of H-block assemblies slidably engaged with a separate one of the pair of elongate uprights, and each one of the second plurality of H-block assemblies slidably engaged with a separate one of the pair of elongate uprights, each H-block assembly defining upper and lower notches for receiving and retaining one of the fastening buttons, wherein each one of the lower pair of fastening buttons of a first one of the plurality of displays is engaged in the forward receiver portion of a separate one of the bottom display mounting interface assemblies, each one of the upper pair of fastening buttons of the first one of the plurality of displays is engaged in the lower notch of a separate one of the first plurality of H-block assemblies, each one of the lower pair of fastening buttons of the second one of the plurality of displays is engaged in the upper notch of a separate one of the first plurality of H-block assemblies, and each one of the upper pair of fastening buttons of the second one of the plurality of displays is engaged in the lower notch of a separate one of the second plurality of H-block assemblies.

In an embodiment of the electronic display system each wall attachment assembly includes a wall interface adapted to attach to the wall of the structure, an ear bracket clamped to the elongate upright and having a projecting ear portion, a depth adjustment control operably coupled to the projecting ear portion of the ear bracket assembly, wherein the depth adjustment control is selectively operable to vary a distance between the wall interface and the upright.

In an embodiment, the electronic display system has a second pair of uprights, each of the second pair of uprights aligned with a separate one of the first pair of uprights and coupled to an upper end thereof.

In an embodiment of the electronic display system, each bottom display mounting interface assembly includes a coupling bracket affixed to the bottom end of the upright, and a vertical height adjustment control operably coupled to the coupling bracket, the vertical height adjustment control operably coupled to the forward receiver portion and selectively operable to shift a vertical position of the forward receiver portion relative to the bottom end of the upright.

The above summary is not intended to describe each illustrated embodiment or every implementation of the subject matter hereof. The figures and the detailed description that follow more particularly exemplify various embodiments.

### BRIEF DESCRIPTION OF THE DRAWINGS

Subject matter hereof may be more completely understood in consideration of the following detailed description of various embodiments in connection with the accompanying figures, in which:
FIG. 1 is a front isometric view of an array of electronic displays shown in phantom and a and array mounting system for attaching the displays to a wall according to an embodiment of the invention;
FIG. 2 is a front isometric view of the array mounting system of FIG. 1;
FIG. 2A is a rear isometric view of a vertical mounting assembly of the array mounting system of FIGs. 1 and 2;
FIG. 3 is a partial isometric view of an extruded upright of the array mounting system of FIGs. 1 and 2;
FIG. 4 is a cross-sectional view of the upright of FIG. 3 taken at section 4-4 of FIG. 3;
FIG. 5 is a partial isometric view of wall attachment assemblies of the array mounting system of FIGs. 1 and 2;
FIG. 5A is an exploded isometric view of the wall interface plate, coupling plate, and depth adjustment bolt of one of the wall attachment assemblies of FIG. 5;
FIG. 5B is a partial isometric view of a portion of a wall attachment assembly of FIG. 5 with a top capture bracket;
FIG. 5C is an isometric view of the coupling plate of one of the wall attachment assemblies of FIG. 5;
FIG. 5D is an isometric view of the ear bracket assembly of one of the wall attachment assemblies of FIG. 5;
FIG. 5E is an exploded view of the ear bracket assembly of one of the wall attachment assemblies of FIG. 5;
FIG. 6 is a top plan view of a wall attachment assembly according to FIG. 5 with portions depicted in phantom for clarity with a display mounting interface assembly attached;
FIG. 7 is a partial isometric view of the bottom end of the array mounting system of FIGs. 1 and 2 depicting a bottom display mounting interface with a vertical height adjustment mechanism;
FIG. 8 is an isometric view of an upright connector assembly connecting two uprights of the array mounting system of FIGs. 1 and 2;
FIG. 8A is a top rear isometric view of a connector block of the upright connector assembly depicted in FIG. 8;
FIG. 8B is an isometric view of a plate of the upright connector assembly depicted in FIG. 8;
FIG. 8C is an isometric view of the clamp of the upright connector assembly depicted in FIG. 8;
FIG. 9 is a partial isometric view of the array mounting system of FIGs. 1 and 2 with a display prior to being coupled;
FIG. 10 is an exploded view of an h-block assembly of a display mounting interface assembly according to the array mounting system of FIGs. 1 and 2;
FIG. 10A is a front isometric view of the h-block assembly of FIG. 10 engaged with a fastening button;
FIG. 10B is a cross-section of the h-block assembly and fastening button of FIG. 10A taken at section 10B-10B of FIG. 10A;
FIG. 10C is a rear isometric view of the plumb clip of the h-block assembly of FIG. 10;
FIG. 11 is a partial front isometric view of the array mounting system of FIGs. 1 and 2 depicting engagement of the h-block with a mounting button;
FIG. 12 is an isometric view of the bottom display mounting interface with vertical height adjustment mechanism of FIG. 7, with the upright depicted in phantom for clarity;
FIG. 12A is an exploded view of the bottom display mounting interface with vertical height adjustment mechanism of FIG. 7;
FIG. 13 is a front isometric view of the bottom display mounting interface of FIG. 12 depicted engaged with a mounting button;
FIG. 14 is an isometric view of a mounting button of the array mounting system of FIGs. 1 and 2;
FIG. 15 is an isometric view of the mounting button of FIG. 14 from the opposite side;

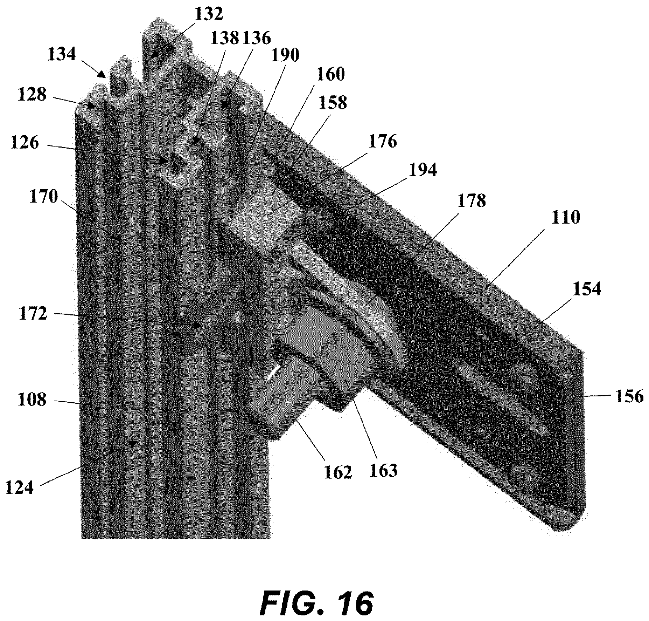

FIG. 16 is a top isometric view depicting the connection of the wall attachment assembly with an upright;
FIG. 17 is a front elevation view of a 2 x 3 array of displays formed by an embodiment of the system; and
FIG. 18 is a front elevation view of a 3 x 4 offset array of displays formed by another embodiment of the system.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by the claims.

### DETAILED DESCRIPTION OF THE DRAWINGS

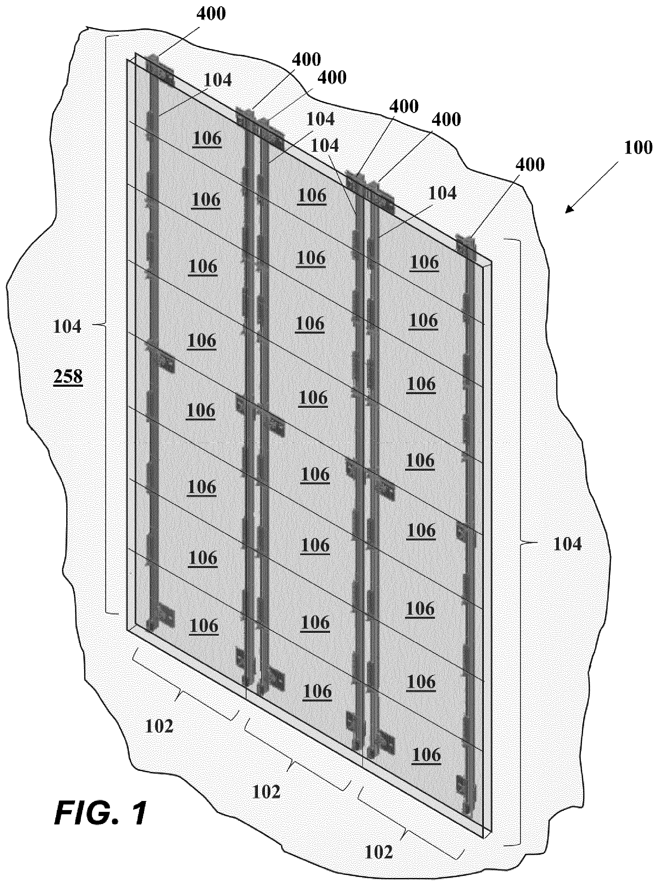

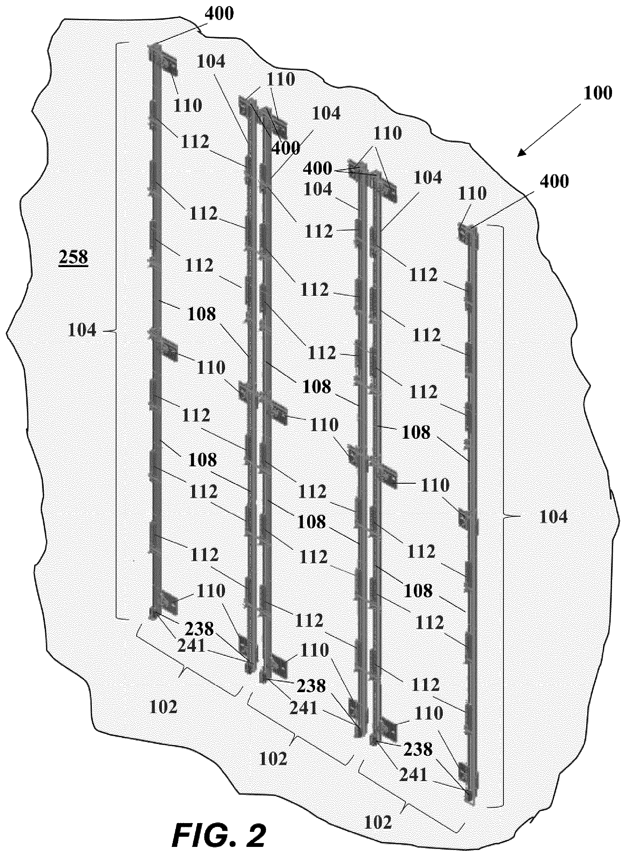

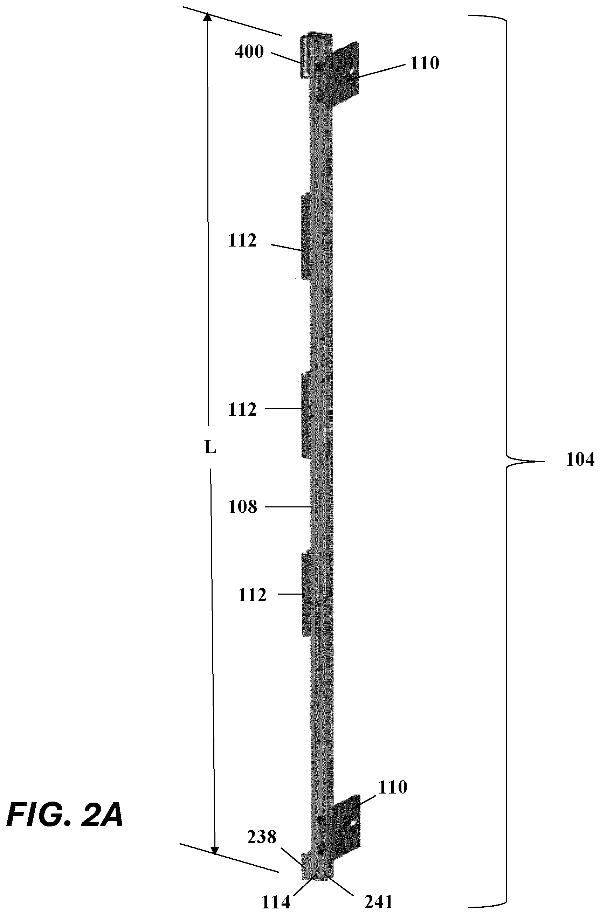

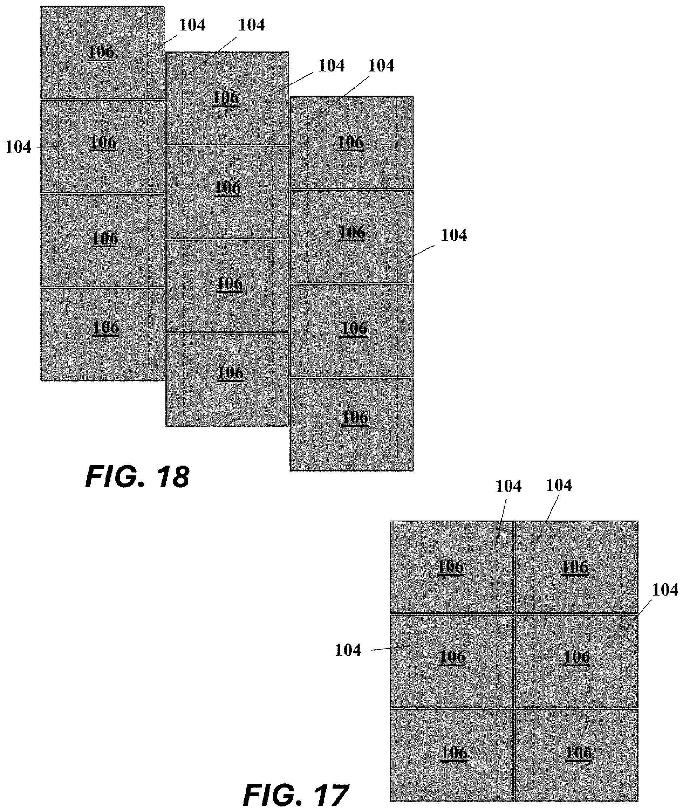

In FIGs. 1 and 2 there is depicted an array mounting system 100 according to an embodiment of the invention. System 100 generally includes one or more pairs 102 of vertical mounting assemblies 104. As depicted in FIG. 1, each pair 102 of vertical mounting assemblies 104 can mount a plurality of displays 106 (depicted in phantom) arranged vertically adjacent along the pair 102. As also depicted in FIG. 1, the pairs 102 can be arranged horizontally adjacent to each other so as to form a horizontally and vertically adjacent array of displays 106. As depicted in FIG. 1, array mounting system 100 forms a 3 x 8 array of displays 106, but it will be appreciated by those skilled in the art that the system can be used to form an array of virtually any other number of displays by varying the length of mounting assemblies 104 and by providing a greater or fewer number of pairs 102. Solely for purposes of example, a 2 x 3 array could be formed such as depicted in FIG. 17, or a 3 x 4 offset array such as depicted in FIG. 18 could be formed.

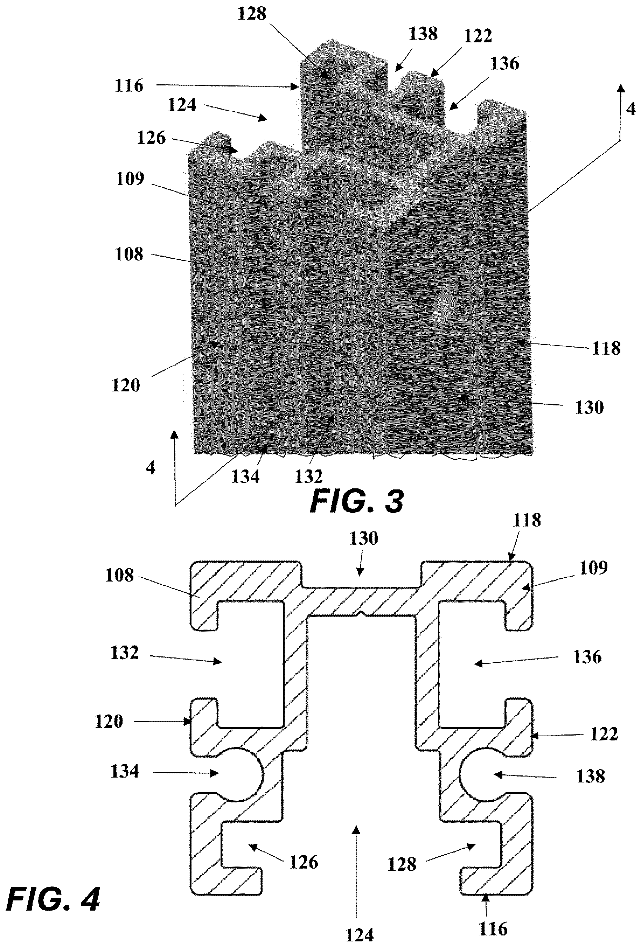

As depicted in FIG. 2A, each vertical mounting assembly 104 (depicted here as including a single extruded upright 108) generally includes extruded elongated upright 108 having longitudinal length dimension L, two or more wall attachment assemblies 110, two or more display mounting interface assemblies 112, and a bottom display mounting interface assembly 114, 238. As depicted in FIGs. 3 and 4, upright 108 can be an elongate extrusion formed from a suitable material such as aluminum, and having body 109 presenting front wall 116, rear wall 118, and side walls 120 and 122. Body 109 defines central channel 124 oriented along longitudinal length L and extending inwardly from front wall 116. Central channel 124 has opposing recesses 126, 128, spaced inwardly from and adjacent front wall 116. Rear wall 118 defines longitudinal recess 130. Side wall 120 defines longitudinal c-shaped channel 132 and longitudinal rounded channel 134, and side wall 122 defines longitudinal c-shaped channel 136 and longitudinal rounded channel 138. It will be appreciated that system 100 is fully modular. Although in the system depicted in FIGs 1 and 2, each vertical mounting assembly 104 includes two extruded uprights 108 arranged end-to-end and connected, each vertical mounting assembly 104 could include only one extruded upright 108 as depicted in FIG. 2A, or could include more than two. The topmost extruded upright 108 in each vertical mounting assembly 104 has top capture bracket 400.

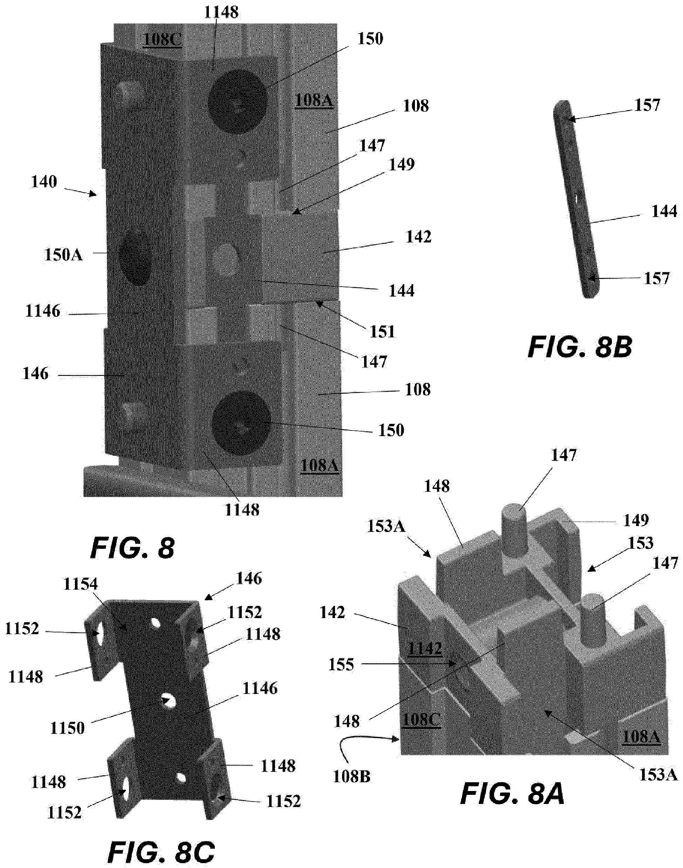

As depicted in FIGs. 8, 8A, 8B, and 8C, two extruded uprights 108 can be connected end-to-end with upright connector assembly 140 to provide a vertical mounting assembly 104 having a greater longitudinal length. Each upright connector assembly 140 generally includes connector block 142, plate 144 and clamp 146. Connector block 142 has projections 147, 148, on upper face 149, and identical projections 147, 148, on lower face 151. Projections 147 are received in longitudinal rounded channels 134, 138, and projections 148 are received in longitudinal c-shaped channels 132, 136, of the vertically adjacent extruded uprights 108. Connector block 142 also defines forward facing channel 153, recesses 153A, and rearward facing threaded aperture 155.

Clamp 146 is u-shaped, having backplane 1146 and forward projections 1148 defining channel 1154. Backplane 1146 defines aperture 1150 and each of projections 1148 defines an aperture 1152.

Plate 144 defines threaded apertures 157. One plate 144 is disposed on one side 108A and another plate 144 is disposed on opposing side 108B of vertically adjacent extruded uprights 108. Plates 144 are received in longitudinal c-shaped channels 132, 136, of vertically adjacent extruded uprights 108, and recesses 153A. Threaded fasteners 150 extend through apertures 1152 threaded apertures 157 to clamp plates 144 into longitudinal c-shaped channels 132, 136.

Vertically adjacent extruded uprights 108 and connector block 142 are received in channel 1154 with backplane 1146 abutting rear faces 108C of extruded uprights 108 and rear face 1142 of connector block 142. Fastener 150A extends through aperture 1150 and into threaded aperture 155.

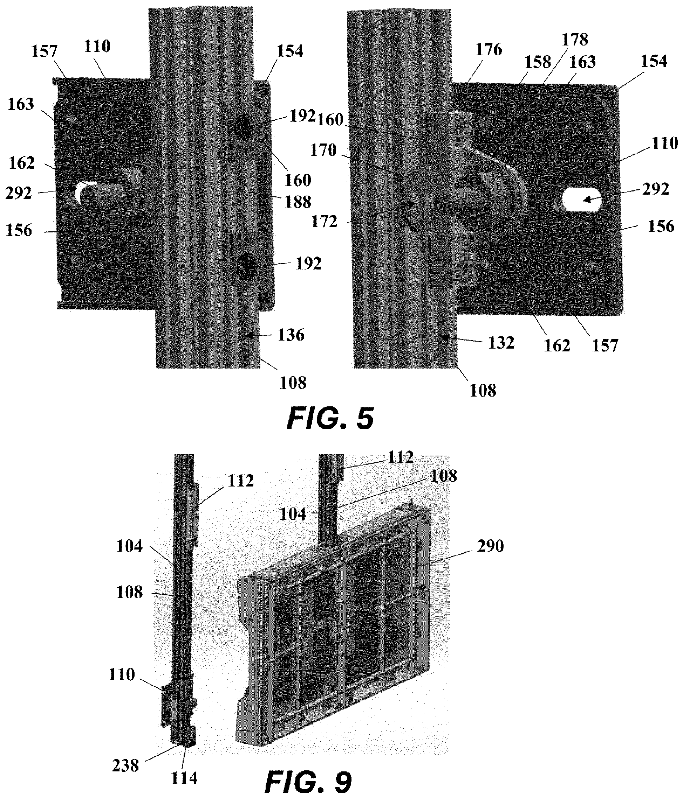

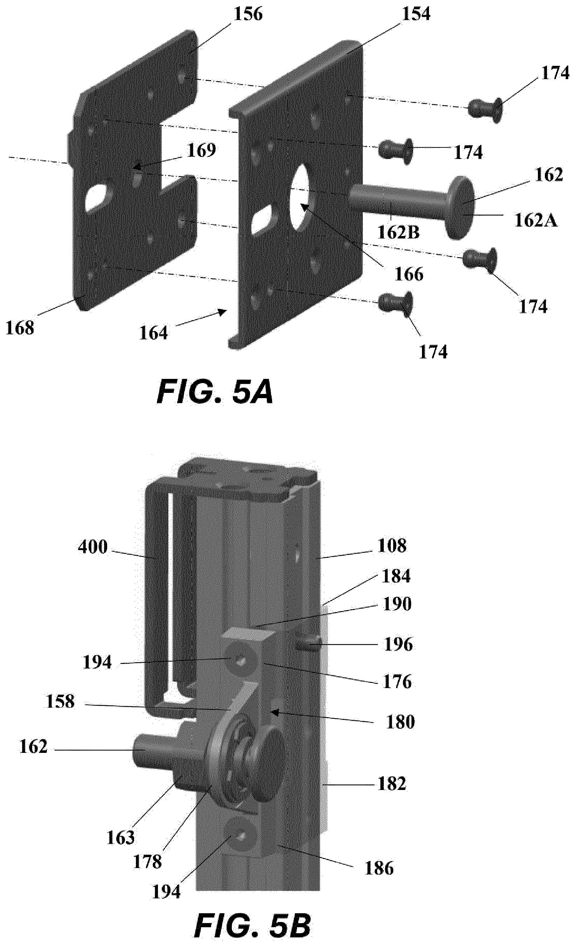

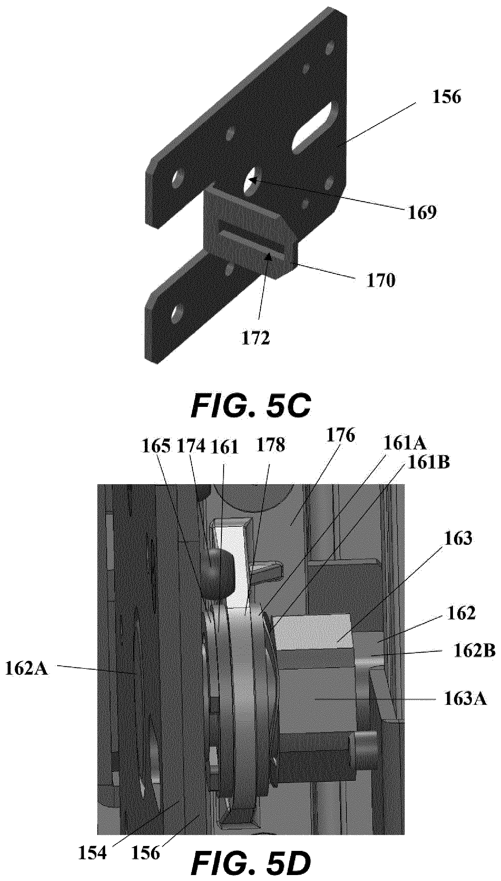

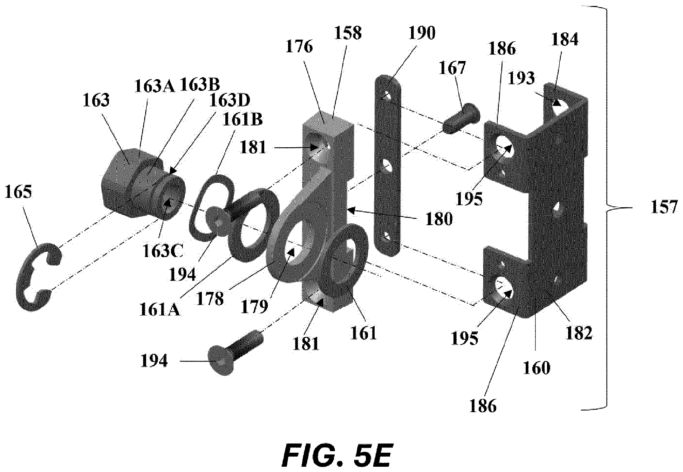

As depicted in FIGs. 5, 5A, 5B, 5C, 5D, 5E, 6, and 7, each wall attachment assembly 110 generally includes wall interface plate 154, coupling plate 156, ear bracket assembly 157, and a depth adjustment control in the form of bolt 162 and depth adjustment nut 163. As depicted in FIG. 5A, wall interface plate 154 defines forward-facing c-shaped channel 164 and aperture 166. Coupling plate 156 has planar face portion 168 defining aperture 169, and forwardly projecting tab 170, which defines guide slot 172. Planar face portion 168 fits into c-shaped channel 164 and coupling plate 156 is riveted to wall interface plate 154 with rivets 174. Depth adjustment bolt 162 is interference-fitted through aperture 169 so that depth adjustment bolt does not rotate. Head 162A of depth adjustment bolt 162 abuts planar face portion 168, while threaded shank 162B extends through coupling plate 156 and projects from the other side of coupling plate 156.

Ear bracket assembly 157 generally includes ear bracket 158, wrap-around bracket 160, washers, 161, 161A, wave washer 161B, depth adjustment nut 163, backing plates 188, 190, e-clip 165, guide pin 167, and fasteners 192, 194, (backing plate 188 and fasteners 192 are not depicted in the exploded view of FIG. 5E for clarity). Ear bracket 158 has base block 176 and projecting ear portion 178. Base block 176 defines recess 180, apertures 181, and projecting ear portion 178 defines aperture 179. Wrap-around bracket 160 is generally u-shaped with backplane 182 and side walls 184, 186, and receives extruded upright 108 between side walls, 184, 186, as depicted in FIG. 5B. Backing plates 188, 190, are received in longitudinal c-shaped channels 132, 136, respectively. Fasteners 192 extend through apertures 193 and thread into backing plate 188 to clamp wrap-around bracket 160 to extruded upright 108, and fasteners 194 extend through apertures 181 and 195 and thread into backing plate 190 to clamp ear bracket 158 and wrap-around bracket 160 to extruded upright 108 on the opposite side of extruded upright 108. Wrap-around bracket 160 is also secured to extruded upright 108 with fastener 196 through rear wall 118. Depth adjustment nut 163 has head portion 163A and shank portion 163B, and defines threaded bore 163C. Shank portion 163B defines groove 163D.

Forwardly projecting tab 170 of coupling plate 156 extends through, and is slidable in, a slot formed by recess 180 in base block 176 and side wall 186 of wrap-around bracket 160. Guide pin 167 extends from backing plate 190 through guide slot 172. Depth adjustment bolt 162 threads into threaded bore 163C of depth adjustment nut 163, and depth adjustment bolt 162 and shank 163B of depth adjustment nut 163 extend through wave washer 161B, washer 161A, aperture 179, and washer 161. E-clip 165 is received in groove 163D to capture projecting ear portion 178 between washers 161, 161A, so that depth adjustment nut 163 is rotatable in aperture 179, and ear bracket 158 translates along depth adjustment bolt 162 as depth adjustment nut 163 is rotated. Ear bracket 158 and extruded upright 108 are thereby moved closer to or further away from wall interface plate 154 and coupling plate 156 depending on the direction of rotation of depth adjustment nut 163. Hence, the depth of the mounting system in the direction perpendicular to the wall on which it is mounted can be adjusted with the wall attachment assemblies 110.

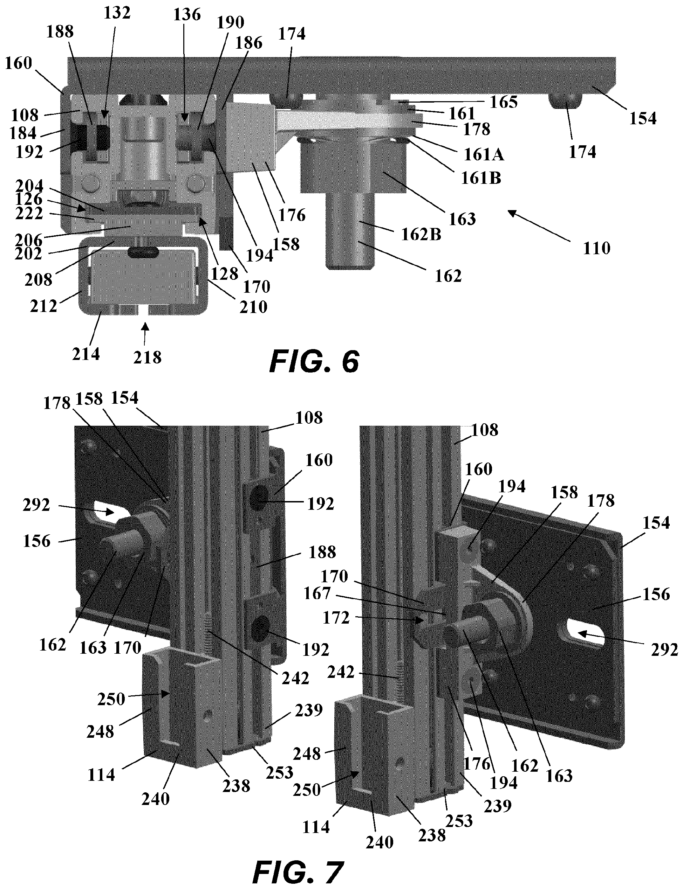

As depicted in FIGs. 6, 10, 10A, 10B, 10C, 11, 14 and 15, each display mounting interface assembly 112 generally includes h-block assembly 198 and fastening buttons 200. H-block assembly 198 generally includes body 202, backing plate 204, holding plate 206, and plumb clip 207. Body 202 has a generally rectangular cross-section, with rear wall 208, side walls 210, 212, and front wall 214. Front wall 214 defines lower notch 216 with width W and elongate upper notch 218 with width W such that front wall 214 defines an elongate "H" pattern. Backing plate 204 defines apertures 203 and holding plate 206 defines apertures 205. Body 202 is secured to backing plate 204 with rivets 220 through apertures (not depicted) in rear wall 208, apertures 203, and apertures 205, with holding plate 206 sandwiched between. Holding plate 206 has laterally projecting resilient spring members 222.

Plumb clip 207 has cuboid body 2071 with downwardly projecting legs 2072, 2073, connected by wall 2074. Legs 2072, 2073, and wall 2074 define notch 2075 having the same width W as lower notch 216 and upper notch 218. Body 2071 defines threaded apertures 2076 on each side. Plumb clip 207 is received in body 202 with notch 2075 registered with lower notch 216, and is secured in position with fasteners 221.

Backing plate 204 and holding plate 206 are slidably received in central channel 124 of extruded upright 108 with resilient spring members 222 engaging the lateral walls of opposing recesses 126, 128, thereby providing friction to temporarily hold display mounting interface assembly 112 in a selected longitudinal position along extruded upright 108.

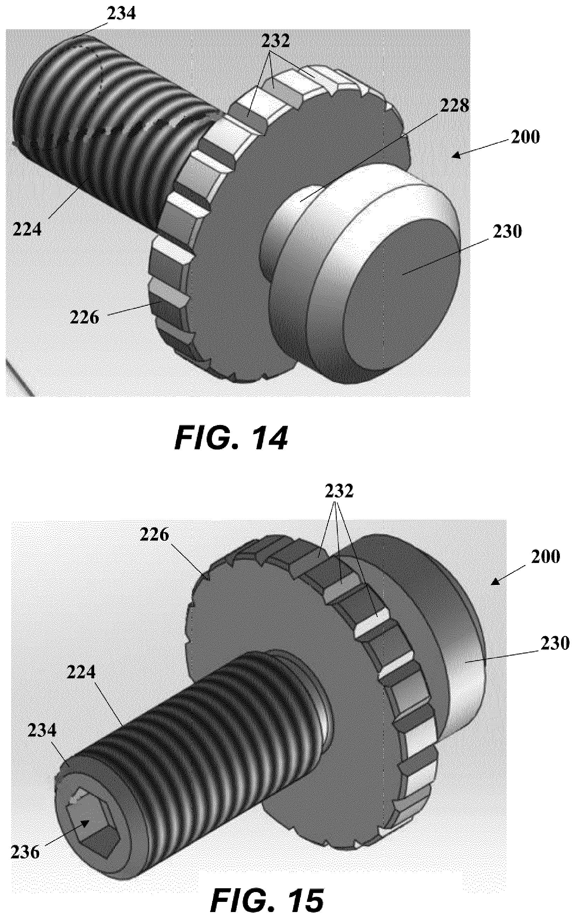

Fastening button 200 is depicted in FIGs. 14 and 15, and generally includes threaded shank 224, a positioning control in the form of drive wheel 226, neck 228, and head 230. Drive wheel 226 may have gripping notches 232 to enable drive wheel 226 to be engaged and fastening button 200 turned with the edge of a flat head screwdriver, and end 234 of threaded shank 224 may have hex drive 236 to enable fastening button 200 to be turned with a hex wrench (not depicted). The diameter of neck 228 is sized so as to fit loosely into width W of lower notch 216 and elongate upper notch 218 of h-block assembly 198, while the diameters of drive wheel 226 and head 230 are larger so as not to be capable of being pulled outwardly or inwardly through width W of lower notch 216 and elongate upper notch 218.

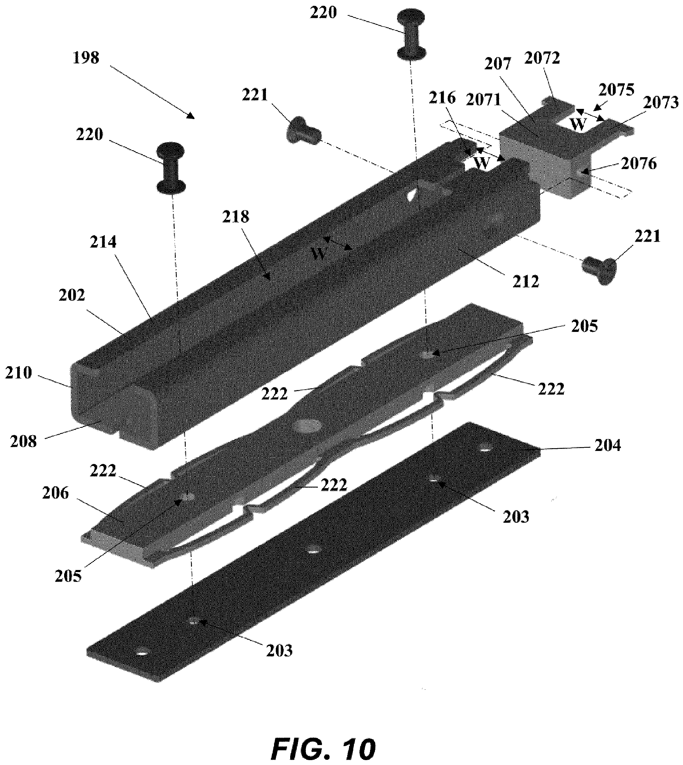

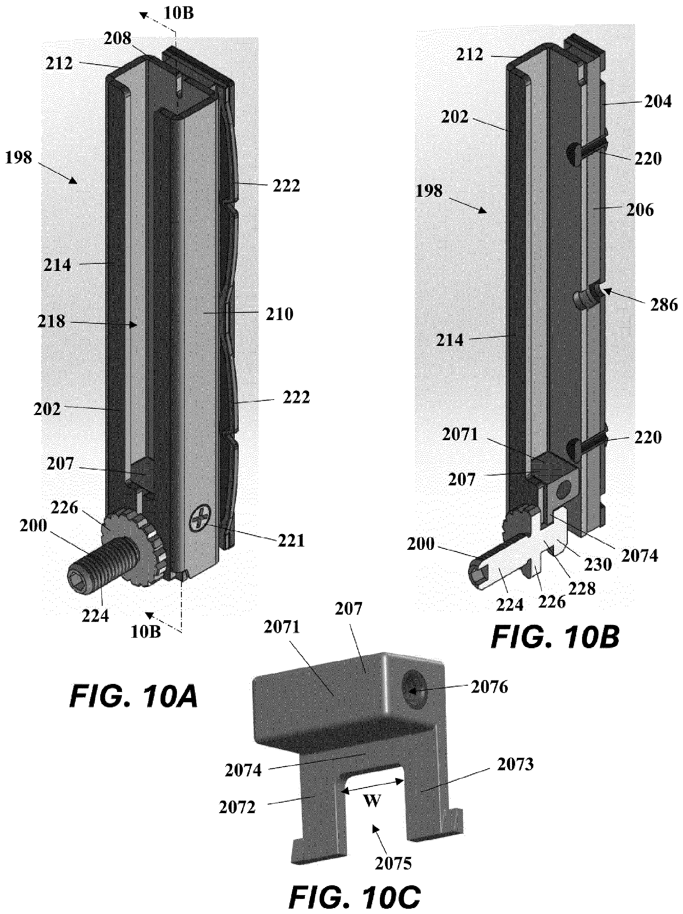

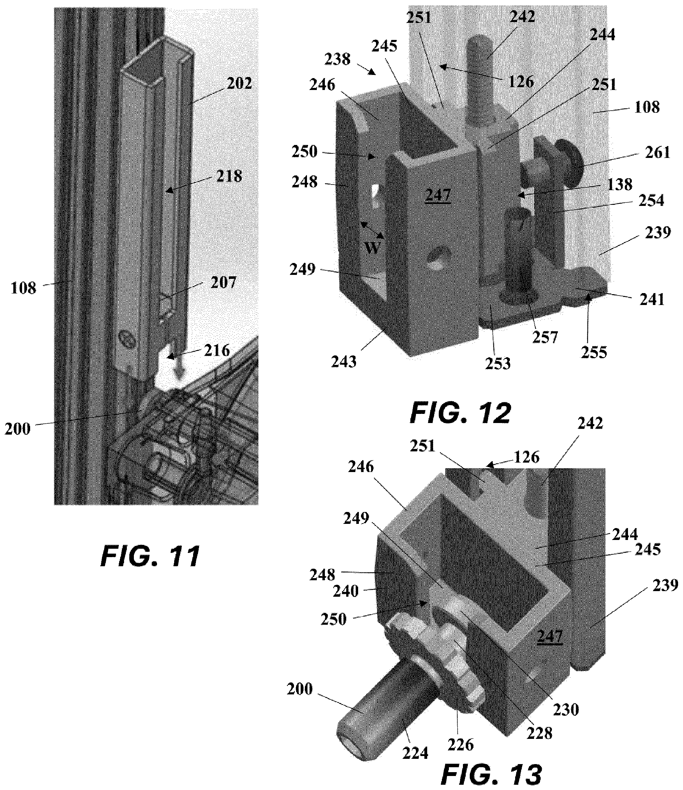

The functioning of plumb clip 207 is depicted in FIGs. 10A, 10B and 11. When display mounting interface assembly 112 with backing plate 204 and holding plate 206 is slid downward in the direction of the arrows in central channel 124 of extruded upright 108 to engage fastening button 200 at the top of a display 106, neck 228 is received in notch 216 and notch 2075 and wall 2074 is disposed between head 230 and front wall 214. The display 106 can thereby be accurately plumbed with respect to the extruded upright 108.

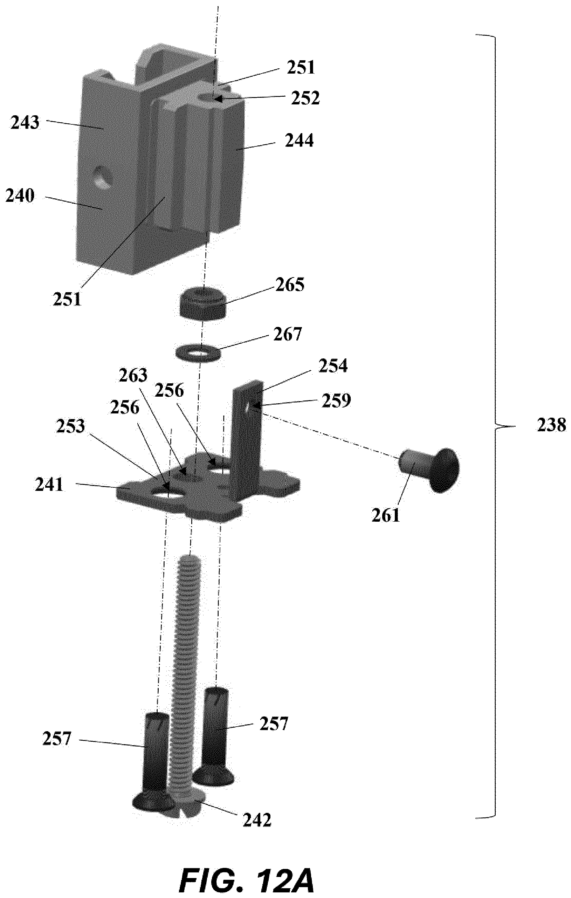

FIGs. 7, 12 and 13 depict bottom display mounting interface assembly 114, 238, which is located at the bottom end 239 of each vertical mounting assembly 104. Display mounting interface assembly 238 generally includes carrier block 240, coupling bracket 241, and vertical height adjustment bolt 242. Carrier block 240 generally includes forward receiver portion 243 and rear guide portion 244. Forward receiver portion 243 has rear wall 245, side walls 246, 247, front wall 248, and bottom wall 249. Front wall 248 defines notch 250 having width W. Again, the diameter of neck 228 is selected so as to fit loosely into width W, while the diameters of drive wheel 226 and head 230 are larger so as not to be capable of being pulled outwardly or inwardly through width W of notch 250.

Rear guide portion 244 projects from rear wall 245 and defines lateral projections 251 which are slidingly received in opposing recesses 126, 128, of central channel 124 of extruded upright 108, and also defines vertical bore 252.

Coupling bracket 241 generally includes base portion 253 and vertical projection 254. Base portion 253 abuts bottom face 255 of extruded upright 108, and defines apertures 256 which receive fasteners 257 that extend into longitudinal rounded channels 134, 138, to attach coupling bracket 241 to extruded upright 108. Vertical projection 254 defines aperture 259, and is received in central channel 124 abutting rear wall 118. Fastener 261 extends through aperture 259 and rear wall 118 to also secure coupling bracket 241 to extruded upright 108. Base portion 253 further defines aperture 263.

Vertical height adjustment bolt 242 receives nut 265 and washer 267, and extends through aperture 263 and vertical bore 252. Vertical height adjustment bolt 242 is captured, and does not translate vertically with rotation. As vertical height adjustment bolt 242 is turned, carrier block 240 slides in central channel 124, translating vertically relative to extruded upright 108 depending on the direction of rotation.

Again, the neck 228 of fastening button 200 fits loosely into width W, while the diameters of drive wheel 226 and head 230 are larger so as not to be capable of being pulled outwardly or inwardly through width W.

In use, with vertical mounting assemblies 104 positioned and parallel, wall attachment assemblies 110 of vertical mounting assemblies 104 can be firmly secured to wall 258 with lag screws (not depicted) through elongate apertures 292. The distance of extruded uprights 108 from the surface of wall 258 can be adjusted and set with depth adjustment nuts 163.

With vertical mounting assemblies 104 in position on wall 258, mounting of displays 106 can proceed by first attaching the bottom-most horizontal row of displays 106. Fastening buttons 200 are threaded into mounting holes provided in the rear side of each display 106. The heads 230 of the bottom two horizontally adjacent fastening buttons 200 of each display 106 are hooked into notches 250 of bottom display mounting interface assemblies 238 with necks 228 extending through the notches, and the next vertically adjacent display mounting interface assemblies 112 are slid downward along extruded uprights 108 so that necks 228 of the top two horizontally adjacent fastening buttons 200 of each display 106 are received in lower notches 216 and notches 2075, and walls 2074 are disposed between heads 230 and front walls 214 with heads 230 inside body 202. Once the entire bottom row of displays 106 has been mounted, the displays 106 can be finely positioned and aligned by turning vertical height adjustment bolt 242 of bottom display mounting interface assemblies 238. When the desired alignment has been achieved, set screws 285 through apertures 286 of display mounting interface assemblies 112 can be tightened to lock display mounting interface assemblies 112 in position along extruded uprights 108. Fastening buttons 200 can be adjusted with a flat blade screwdriver engaged with gripping notches 232 of drive wheel 226 to finely adjust the position of the front plane of the displays 106 to ensure they are precisely aligned with each other. Alternatively, where display 106 enables access to fastening buttons 200 from the front, for example where display 106 is a hollow enclosure 290 as depicted in FIG. 9 for receiving signage or a smaller electronic display device, fastening buttons 200 can be turned with a hex wrench (not depicted) engaged in hex drives 236.

The next vertically adjacent horizontal row of displays 106 in the array can next be installed by threading fastening buttons 200 into the mounting holes of the displays 106, and advancing necks 228 of the bottom two horizontally adjacent fastening buttons 200 of each display 106 downward in upper notches 218 with heads 230 inside body 202 of display mounting interface assemblies 112 securing the adjacent row of displays 106 below. As before, the next vertically adjacent display mounting interface assemblies 112 are slid downward along extruded uprights 108 so that necks 228 of the top two horizontally adjacent fastening buttons 200 of each display 106 in the row are received in lower notches 216 and notches 2075, and walls 2074 are disposed between heads 230 and front walls 214 with heads 230 inside body 202. Set screws 285 through apertures 286 are tightened, and fastening buttons 200 are adjusted as for the bottom-most row of displays. Installation can thus proceed with each successive horizontal row of displays 106 until all displays are mounted and positioned.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

## Claims

1. A mounting system for mounting a plurality of displays in an array on a wall of a structure, the mounting system comprising:
a pair of horizontally spaced-apart and parallel vertical mounting assemblies, each vertical mounting assembly comprising:
a first elongate upright presenting a front wall, a rear wall, and opposing side walls, and a longitudinal length dimension, a longitudinally oriented central channel defined in the front wall, the longitudinally oriented central channel having opposing recesses spaced inwardly from the front wall;
a plurality of wall attachment assemblies, each wall attachment assembly comprising:
a wall interface adapted to attach to the wall of the structure;
an ear bracket clamped to the elongate upright and having a projecting ear portion; and
a depth adjustment control operably coupled to the projecting ear portion of the ear bracket assembly, wherein the depth adjustment control is selectively operable to vary a distance between the wall interface and the upright;
a plurality of display mounting interface assemblies disposed along the longitudinal length dimension of the upright, each display mounting interface assembly comprising:
an H-block assembly including a body having a front wall defining a lower notch having a width dimension, an upper notch having a width dimension, a recess being defined behind the front wall of the body, the H-block assembly further including a securing portion slidably received in the central channel of the upright and having a plurality of resilient members engaged in the opposing recesses of the central channel of the upright to temporarily frictionally hold the H-block assembly in a selected vertical position on the upright; and
a plurality of fastening buttons adapted to couple with the display, each fastening button having a head portion, a neck portion, and a positioning control, the neck portion having a width dimension less than the width dimensions of the lower notch and the upper notch, the head portion having a width dimension greater than the width dimensions of the downwardly facing notch and the upwardly facing notch and received in the recess of the H-block assembly, the positioning control selectively operable to position the head portion relative to a rear side of the front wall of the body; and
a bottom display mounting interface assembly disposed proximate and secured to a bottom end of the upright, the bottom display mounting interface assembly comprising a carrier block having a forward receiver portion and a rear guide portion, the forward receiver portion having a front wall defining a notch, the notch having a width dimension greater than the width dimension of the neck of each of the plurality of fastening buttons and less than the width dimension of the head of each of the plurality of fastening buttons, the rear guide portion slidably received in the opposing recesses of the upright.

2. The mounting system of claim 1, wherein each of the opposing side walls of the upright defines a longitudinally oriented channel, and each of the ear brackets of the wall attachment assemblies comprises a wrap-around bracket having a rear wall and a pair of spaced-apart projecting side walls, and a pair of backing plates, the upright being received between the spaced-apart projecting side walls and each of the backing plates being received in a separate one of the longitudinally oriented channels of the upright and secured to the wrap-around bracket to clamp the ear bracket to the upright.

3. The mounting system of claim 2, wherein the wall interface has a forwardly projecting tab defining a guide slot, the forwardly projecting tab being slidably received in a slot defined by the ear bracket, a guide pin extending from one of the pair of backing plates through the guide slot, wherein when the depth adjustment control is operated, the ear bracket slides over the forwardly projecting tab, guided by the guide pin and guide slot.

4. The mounting system of any one of claims 1, 2, or 3, wherein the depth adjustment control is a threaded bolt fixed to the wall interface, and a nut selectively rotatable on the threaded bolt.

5. The mounting system of any one of claims 1, 2, 3, or 4 wherein each of the vertical mounting assemblies includes a second elongate upright coupled at a top end of the first upright, the second elongate upright presenting a front wall, a rear wall, and opposing side walls, and a longitudinal length dimension, a longitudinally oriented central channel defined in the front wall, the longitudinally oriented central channel having opposing recesses spaced inwardly from the front wall, the longitudinally oriented central channel of the second upright aligned with the longitudinally oriented central channel of the first elongate upright,
and wherein preferably the first and second uprights are coupled together with an upright connector assembly.

6. The mounting system of any one of the preceding claims, wherein the bottom display mounting interface assembly includes a coupling bracket affixed to the bottom end of the upright, and a vertical height adjustment control operably coupled to the coupling bracket, the vertical height adjustment control operably coupled to the carrier block and selectively operable to shift a vertical position of the carrier block relative to the bottom end of the upright,
and wherein preferably the vertical height adjustment control comprises a bolt captured by the coupling bracket and rotatable relative to the coupling bracket, the bolt threaded into the carrier block such that rotation of the bolt selectively vertically shifts the carrier block relative to the coupling bracket.

7. The mounting system of any one of the preceding claims, wherein each display mounting interface assembly further comprises a plumb clip selectively positionable between the head portion of the fastening button and the rear side of the front wall of the body, and/or wherein each one of the plurality of displays has an electronic display screen selected from the group consisting of LED screens, OLED screens, OLEO screens, and LCD screens.

8. A method of mounting a first plurality of displays in a vertical and horizontal array on a wall of a structure, the method comprising:
providing first and second pairs of mounting assemblies, each mounting assembly comprising:
a first elongate upright presenting a front wall, a rear wall, and opposing side walls, and a longitudinal length dimension, a longitudinally oriented central channel defined in the front wall, the longitudinally oriented central channel having opposing recesses spaced inwardly from the front wall;
a plurality of wall attachment assemblies, each wall attachment assembly comprising:
a wall interface adapted to attach to the wall of the structure;
an ear bracket clamped to the elongate upright and having a projecting ear portion; and
a depth adjustment control operably coupled to the projecting ear portion of the ear bracket assembly, wherein the depth adjustment control is selectively operable to vary a distance between the wall interface and the upright;
a plurality of display mounting interface assemblies disposable along the longitudinal length dimension of the upright, each display mounting interface assembly comprising:
an H-block assembly including a body having a front wall defining a lower notch having a width dimension, an upper notch having a width dimension, a recess being defined behind the front wall of the body, the H-block assembly further including a securing portion slidably received in the central channel of the upright and having a plurality of resilient members engaged in the opposing recesses of the central channel of the upright to temporarily frictionally hold the H-block assembly in a selected vertical position on the upright; and
a plurality of fastening buttons adapted to couple with the display, each fastening button having a head portion, a neck portion, and a positioning control, the neck portion having a width dimension less than the width dimensions of the lower notch and the upper notch, the head portion having a width dimension greater than the width dimensions of the downwardly facing notch and the upwardly facing notch and receivable in the recess of the H-block assembly, the positioning control selectively operable to position the head portion relative to a rear side of the front wall of the body; and
a bottom display mounting interface assembly disposed proximate and secured to a bottom end of the upright, the bottom display mounting interface assembly comprising a carrier block having a forward receiver portion and a rear guide portion, the forward receiver portion having a front wall defining a notch, the notch having a width dimension greater than the width dimension of the neck of each of the plurality of fastening buttons and less than the width dimension of the head of each of the plurality of fastening buttons, the rear guide portion slidably received in the opposing recesses of the upright;
securing the first and second pairs of mounting assemblies to the wall with the wall attachment assemblies, the upright of each mounting assembly disposed so as to extend in a vertical direction and spaced-apart horizontally and parallel to the uprights of each other mounting assembly;
attaching four of the plurality of fastening buttons to a rear side of a first display with a lower pair of the fastening buttons being disposed along a bottom edge of the first display and an upper pair of the fastening buttons being disposed along a top edge of the first display;
engaging each of the lower pair of fastening buttons on the first display with a separate one of the forward receiver portions of the bottom display mounting interface assemblies of the first pair of mounting assemblies, with the neck of the fastening button extending through the notch;
sliding a first one of the plurality of H-block assemblies on each upright of the first pair of mounting assemblies to engage one of the upper pair of fastening buttons on the first display so that the neck of the fastening button extends through the lower notch; attaching another four of the plurality of fastening buttons to a rear side of a second display with a lower pair of the fastening buttons being disposed along a bottom edge of the second display and an upper pair of the fastening buttons being disposed along a top edge of the second display;
engaging each of the lower pair of fastening buttons of the second display with a separate one of the forward receiver portions of the bottom display mounting interface assemblies of the second pair of mounting assemblies, with the neck of the fastening button extending through the notch; and
sliding a first one of the plurality of H-block assemblies on each upright of the second pair of mounting assemblies to engage one of the upper pair of fastening buttons on the second display so that the neck of the fastening button extends through the lower notch; wherein the first and second displays are attached to the wall in a horizontally adjacent row.

9. The method of claim 8, further comprising adjusting the depth adjustment control of each of the plurality of wall attachment assemblies of each of the first and second pairs of mounting assemblies to adjust a distance between the upright of the respective mounting assembly and the wall.

10. The method of claim 8 or 9, wherein the bottom display mounting interface assembly of each mounting assembly includes a coupling bracket affixed to the bottom end of the upright, and a vertical height adjustment control operably coupled to the coupling bracket, the vertical height adjustment control operably coupled to the carrier block and selectively operable to shift a vertical position of the carrier block relative to the bottom end of the upright, and wherein the method further comprises positioning the first and second displays with the vertical height adjustment controls,
preferably the method further comprising adjusting a position of each of the first and second displays using the positioning control of each fastening button.

11. The method of any of claims 8-10, wherein each display mounting interface assembly further comprises a plumb clip selectively positionable between the head portion of the fastening button and the rear side of the front wall of the body, and the method further comprises adjusting the positions of the first and second display using the plumb clips.

12. The method of any one of claims 8-11, further comprising mounting third and fourth displays above the first and second displays respectively by:
attaching four of the plurality of fastening buttons to a rear side of a third display with a lower pair of the fastening buttons being disposed along a bottom edge of the third display and an upper pair of the fastening buttons being disposed along a top edge of the third display;
engaging the lower pair of fastening buttons of the third display in the upper notches of the first H-block assemblies on the first pair of mounting assemblies with the necks of the fastening buttons extending through the notches;
sliding a second one of the plurality of H-block assemblies on each upright of the first pair of mounting assemblies to engage one of the upper pair of fastening buttons on the third display so that the neck of the fastening button extends through the lower notch;
attaching four of the plurality of fastening buttons to a rear side of a fourth display with a lower pair of the fastening buttons being disposed along a bottom edge of the fourth display and an upper pair of the fastening buttons being disposed along a top edge of the fourth display;
engaging the lower pair of fastening buttons of the fourth display in the upper notches of the first H-block assemblies on the second pair of mounting assemblies with the necks of the fastening buttons extending through the notches;
sliding a second one of the plurality of H-block assemblies on each upright of the second pair of mounting assemblies to engage one of the upper pair of fastening buttons on the fourth display so that the neck of the fastening button extends through the lower notch.

13. An electronic display system comprising:
a plurality of electronic displays, each of the plurality of electronic displays having a plurality of fastening buttons on a rear side of the electronic display arranged in a lower pair and an upper pair;
a mount comprising:
a first pair of elongate uprights;
a plurality of wall attachment assemblies adapted to operably couple the elongate uprights to a surface of the wall;
a pair of bottom display mounting interface assemblies, each bottom display mounting interface assembly coupled to a bottom end of a separate one of the elongate uprights, each bottom display mounting interface assemblies having a forward receiver portion for receiving and retaining one of the fastening buttons;
first and second pluralities of H-block assemblies, each one of the first plurality of H-block assemblies slidably engaged with a separate one of the pair of elongate uprights, and each one of the second plurality of H-block assemblies slidably engaged with a separate one of the pair of elongate uprights, each H-block assembly defining upper and lower notches for receiving and retaining one of the fastening buttons;
wherein each one of the lower pair of fastening buttons of a first one of the plurality of displays is engaged in the forward receiver portion of a separate one of the bottom display mounting interface assemblies, each one of the upper pair of fastening buttons of the first one of the plurality of displays is engaged in the lower notch of a separate one of the first plurality of H-block assemblies, each one of the lower pair of fastening buttons of the second one of the plurality of displays is engaged in the upper notch of a separate one of the first plurality of H-block assemblies, and each one of the upper pair of fastening buttons of the second one of the plurality of displays is engaged in the lower notch of a separate one of the second plurality of H-block assemblies.

14. The electronic display system of claim 13, wherein each wall attachment assembly comprises:
a wall interface adapted to attach to the wall of the structure;
an ear bracket clamped to the elongate upright and having a projecting ear portion; and
a depth adjustment control operably coupled to the projecting ear portion of the ear bracket assembly, wherein the depth adjustment control is selectively operable to vary a distance between the wall interface and the upright,
and/or the electronic display system further comprising a second pair of uprights, each of the second pair of uprights aligned with a separate one of the first pair of uprights and coupled to an upper end thereof.

15. The electronic display system of claim 13 or 14, wherein each bottom display mounting interface assembly includes a coupling bracket affixed to the bottom end of the upright, and a vertical height adjustment control operably coupled to the coupling bracket, the vertical height adjustment control operably coupled to the forward receiver portion and selectively operable to shift a vertical position of the forward receiver portion relative to the bottom end of the upright.
